# FASCICULE DE BREVET EUROPEEN

(11) **EP 3 633 703 B1**
(45) Date de publication et mention de la délivrance du brevet: **25.08.2021**
(21) Numéro de dépôt: 19199499.5
(22) Date de dépôt: 25.09.2019
(51) Int. Cl.: H01H 3/30, F16H 33/02

(54) **MODULE DE VERROUILLAGE D'UN SYSTÈME D'ARMEMENT POUR APPAREIL ÉLECTRIQUE INTERRUPTEUR**
VERRIEGELUNGSMODUL EINES AKTIVIERUNGSSYSTEMS FÜR EINE ELEKTRISCHE SCHALTVORRICHTUNG
LOCKING MODULE OF A TRIGGERING SYSTEM FOR ELECTRICAL SWITCHING DEVICE

(30) Priorité: 03.10.2018 FR 1859165
(43) Date de publication de la demande: 08.04.2020
(73) Titulaire: Schneider Electric Industries SAS, 92500 Rueil Malmaison (FR)
(72) Inventeur: TREFFOT, Dominique, 38050 GRENOBLE Cedex 09 (FR)
(74) Mandataire: Brevalex

(56) Documents cités:
- FR-A- 1 586 097
- FR-A1- 2 985 600

## Description

### DOMAINE TECHNIQUE

La présente invention concerne un module de verrouillage d'un système d'armement pour un appareil électrique interrupteur, et notamment un système d'armement d'un module d'établissement et de coupure de courant. L'invention concerne également un système de commande d'un module d'établissement et de coupure de courant pourvu du module de verrouillage selon la présente invention.

### ÉTAT DE LA TECHNIQUE ANTÉRIEURE

Un module de verrouillage d'un système d'armement peut être mis en œuvre pour la manœuvre, et notamment la fermeture et/ou l'ouverture, d'un module d'établissement et de coupure de courant dans un appareil électrique interrupteur, notamment un appareil électrique interrupteur opérant en moyenne tension ou haute tension, c'est-à-dire opérant à une tension supérieure à 1000V.

Dans la suite de l'énoncé, le module d'établissement et de coupure de courant sera nommé module de coupure de courant, étant entendu que ce dernier est également susceptible d'être mis en œuvre pour l'établissement et la coupure du courant.

Dans le présent document, le terme appareil électrique interrupteur regroupe indifféremment plusieurs types d'appareils électriques comme un interrupteur, un disjoncteur, un contacteur, un interrupteur fusible, un sectionneur, un recloser, etc...

Le système d'armement est à cet égard pourvu d'un moyen d'accumulation destiné à libérer une énergie mécanique au cours du passage d'un état armé à un état désarmé.

Le module de verrouillage comprend par ailleurs :
- un levier en liaison pivot autour d'un premier arbre pivot, et qui comprend une première et une seconde extrémité, la seconde extrémité comprenant une surface, dite surface d'appui, le moyen d'accumulation exerçant un effort de poussée sur la première extrémité lorsqu'il est dans l'état armé ;
- un élément verrou destiné à adopter l'une ou l'autre de deux positions dites, respectivement, première position et seconde position, la première position correspondant à une position pour laquelle la surface d'appui est en appui contre une surface de contact de l'élément verrou de manière à s'opposer à toute rotation du levier due à l'effort de poussée et maintenir le moyen d'accumulation dans l'état armé, la seconde position correspondant à un retrait de la surface de contact de manière à autoriser le moyen d'accumulation à passer de l'état armé à l'état désarmé.

L'élément verrou de ce module de verrouillage peut comprendre une demi-lune en liaison pivot autour d'un second axe pivot.

Par « demi-lune », on entend un cylindre tronqué selon un plan de coupe parallèle à l'axe de révolution dudit cylindre. Un exemple particulier d'une demi-lune est un demi-cylindre. La surface cylindrique restante de la demi-lune définit la surface de contact.

Le moyen d'accumulation peut comprendre un ressort, par exemple, un ressort de compression ou un ressort spiral, qui dès lors qu'il est mis en compression ou en tension se trouve dans l'état armé.

Ce module de verrouillage connu de l'état de la technique n'est cependant pas satisfaisant et est perfectible tant sur le plan technique que sur le plan économique.

En effet, afin de permettre le passage de l'élément verrou de sa première position vers sa seconde position avec un effort raisonnable, le coefficient de frottement entre la surface de contact et la surface d'appui doit être le plus faible possible.

À cet égard, la surface d'appui du levier est généralement préparée de manière à présenter une rugosité relativement faible, en particulier inférieure à 1,6 µm (Ra), par exemple comprise entre 0,6 µm et 1,6µm.

Une telle préparation de surface est généralement obtenue avec des équipements de rectification relativement coûteux et compliqués à mettre en œuvre.

Par ailleurs, le levier comprend d'ordinaire une plaque métallique relativement épaisse, notamment supérieure à 6 mm, de manière à lui conférer une surface de contact transversale suffisamment large pour éviter notamment un matage et donc une déformation de la demi-lune. La fabrication du levier est donc généralement exécutée par un procédé d'usinage d'un bloc métallique qui est coûteux et compliqué à mettre en œuvre.

Le document FR2985600 décrit un module de verrouillage.

Un but de la présente invention est alors de proposer un module de verrouillage pour lequel l'ajustement du coefficient de frottement entre la surface d'appui et la surface de contact est plus simple à mettre en œuvre et d'un coût réduit.

Un autre but de la présente invention est également de proposer un module de verrouillage pour lequel le levier est plus simple à fabriquer et d'un coût réduit.

### EXPOSÉ DE L'INVENTION

Les buts de la présente invention sont, au moins en partie, atteints par un module de verrouillage d'un système d'armement pourvu d'un moyen d'accumulation destiné à libérer une énergie mécanique au cours du passage d'un état armé à un état désarmé, le module comprenant :
- un levier en liaison pivot autour d'un premier arbre pivot, et qui comprend une première extrémité et une seconde extrémité, la seconde extrémité comprenant une surface, dite surface d'appui, qui présente une largeur, dite largeur d'appui, le moyen d'accumulation pouvant exercer un effort de poussée sur la première extrémité lorsqu'il est dans l'état armé ;
- un élément verrou configuré pour adopter l'une ou l'autre de deux positions dites, respectivement, première position et seconde position, la première position correspondant à une position pour laquelle la surface d'appui est en appui contre une surface de contact de l'élément verrou de manière à s'opposer à toute rotation du levier due à l'effort de poussée et maintenir le moyen d'accumulation dans l'état armé, la seconde position correspondant à un retrait de la surface de contact de manière à autoriser le moyen d'accumulation à passer de l'état armé à l'état désarmé ;
le module étant caractérisé en ce qu'un patin, fait d'un feuillard métallique et fixé au levier, vient s'interposer entre la surface d'appui et la surface de contact lorsque la surface d'appui est en appui contre la surface de contact, une portion de surface de patin, dite surface secondaire, étant en contact avec la surface de contact, ladite surface secondaire présentant une largeur, dite largeur de patin, supérieure à la largeur d'appui.

Selon un mode de mise en œuvre, la largeur de patin est au moins deux fois supérieure à la largeur d'appui.

Selon un mode de mise en œuvre, la surface secondaire présente une rugosité inférieure à 1,6 µm Ra.

Selon un mode de mise en œuvre, le patin comprend également une languette de maintien qui est engagée dans une fente ménagée dans le levier de manière à maintenir le patin audit levier.

Selon un mode de mise en œuvre, le levier comprend un moyeu surmoulé en matière plastique assurant la liaison pivot dudit levier avec le premier arbre pivot, avantageusement le moyeu comprend un alésage, traversé par le premier arbre pivot, et s'étendant sur une longueur d'au moins trois fois le diamètre de l'arbre pivot.

Selon un mode de mise en œuvre, le levier comprend une plaque métallique d'une épaisseur inférieure à 6 mm, avantageusement comprise entre 2 mm et 6 mm.

Selon un mode de mise en œuvre, l'élément verrou est une demi-lune en liaison pivot autour d'un second arbre pivot, avantageusement essentiellement parallèle au premier arbre pivot, la surface de contact étant définie par une section de la surface à géométrie cylindrique de la demi-lune.

L'invention concerne également un système d'armement comprenant la module de verrouillage selon la présente invention, ledit système d'armement comprend une platine mécaniquement couplée au moyen d'accumulation et portant un galet destiné à appliquer l'effort de poussée sur la première extrémité.

Selon un mode de mise en œuvre, le moyen d'accumulation comprend un ressort spiral pourvu d'une extrémité périphérique et d'une extrémité centrale mécaniquement liée à un arbre d'armement, avantageusement via une gorge pratiquée dans ledit arbre d'armement.

Selon un mode de mise en œuvre, le système d'armement est un mécanisme d'ouverture d'un dispositif de coupure de courant.

Selon un mode de mise en œuvre, le système d'armement est un mécanisme de fermeture d'un dispositif de coupure de courant, l'extrémité périphérique étant liée mécaniquement à une roue, elle-même en liaison pivot autour de l'arbre d'armement.

Selon un mode de mise en œuvre, le système d'armement est un mécanisme d'ouverture d'un dispositif de coupure de courant, l'extrémité périphérique étant maintenue fixe, la roue étant en liaison fixe avec l'arbre d'armement.

L'invention concerne également un module de commande d'un dispositif de coupure de courant qui comprend un système d'armement pour l'ouverture du dispositif de coupure de courant et/ou un système d'armement pour la fermeture du dispositif de coupure de courant.

L'invention concerne également un module de commande d'un dispositif de coupure de courant qui comprend un module pourvu d'un système d'armement pour l'ouverture du dispositif de coupure de courant et un module pourvu d'un système d'armement pour la fermeture du dispositif de coupure de courant, les deux systèmes d'armement ayant un arbre d'armement commun.

L'invention concerne également un appareil électrique interrupteur comprenant un module de commande selon la présente invention.

### BRÈVE DESCRIPTION DES DESSINS

D'autres caractéristiques et avantages apparaîtront dans la description qui va suivre du module de verrouillage d'un système d'armement selon l'invention, donnés à titre d'exemples non limitatifs, en référence aux dessins annexés dans lesquels :
- la figure 1 est une représentation schématique d'un premier exemple de module de verrouillage selon la présente invention ;
- la figure 2 est une représentation schématique d'un second exemple de module de verrouillage selon la présente invention ;
- les figures 3a et 3b sont des représentations schématiques du levier de la figure 1, respectivement, selon la première face et selon la seconde face ;
- la figure 3c est une représentation schématique du patin disposée au niveau de la seconde extrémité du levier de la figure 1 ;
- la figure 3d est une représentation schématique du levier de la figure 1 pourvu d'un moyeu ;
- les figures 4a et 4b sont des représentations schématiques du levier de la figure 2, respectivement, selon la première face et selon la seconde face ;
- la figure 4c est une représentation schématique du patin au niveau de la seconde extrémité du levier de la figure 2 ;
- la figure 4d est une représentation schématique du levier de la figure 2 pourvu d'un moyeu ;
- la figure 5 est une représentation schématique en perspective d'une demi-lune ;
- la figure 6 est une représentation schématique d'un ressort spiral plat à spires non jointives lié à l'arbre d'armement via une gorge.

### EXPOSÉ DÉTAILLÉ DE MODES DE RÉALISATION PARTICULIERS

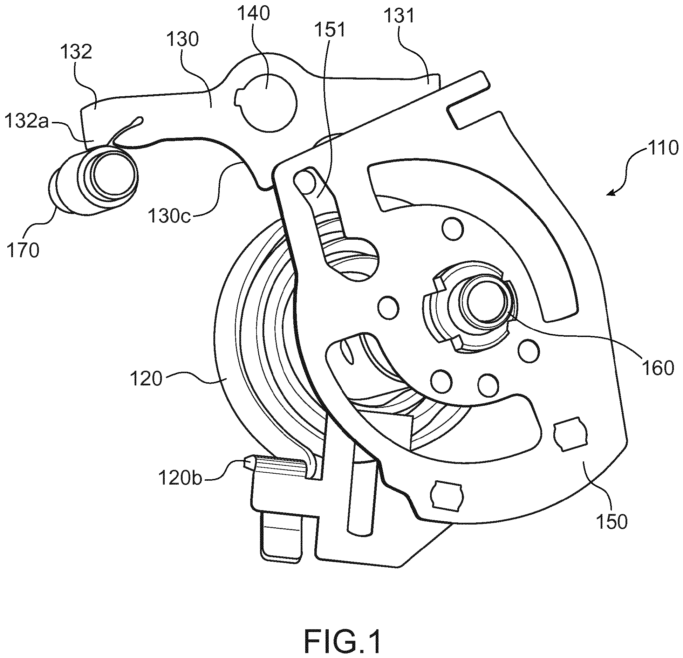

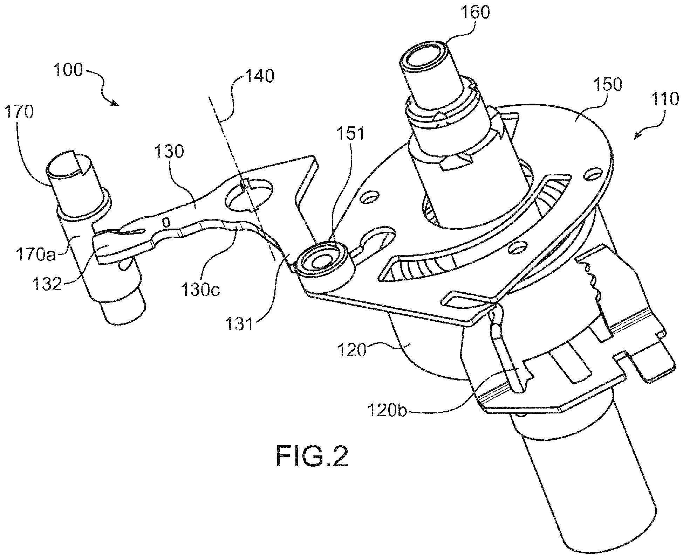

Les figures 1 et 2 sont des représentations schématiques d'un premier exemple et d'un second exemple d'un module de verrouillage 100 selon la présente invention.

Un module de verrouillage, tel que représenté sur ces figures, est généralement mis en œuvre pour la commande d'ouverture (figure 1) et/ou de fermeture (figure 2) d'un dispositif de coupure de courant et notamment un interrupteur.

À cet égard, une commande d'ouverture et une commande de fermeture comprennent en général l'action d'un système d'armement 110 pourvu d'un moyen d'accumulation 120 d'énergie mécanique.

Le moyen d'accumulation 120 d'énergie peut en particulier comprendre un ressort, et notamment un ressort de compression ou un ressort spiral (il est entendu qu'un ressort spiral au sens de la présente invention est un ressort plat à spires non jointives, par exemple enroulé autour d'un arbre).

Le moyen d'accumulation 120 peut adopter l'un ou l'autre de deux états dits, respectivement, état armé et état désarmé, et est adapté pour libérer une énergie mécanique lorsqu'il passe de l'état armé à l'état désarmé. À cet égard, l'état armé résulte d'un armement (ou phase d'armement) du moyen d'accumulation 120.

Le module de verrouillage 100 comprend un levier 130 (figure 1, 2, 3a, 3b, 4a, 4b) en liaison pivot autour d'un premier arbre pivot 140.

Le levier 130 comprend une première extrémité 131 et une seconde extrémité 132 (également dénommée « crochet »), la seconde extrémité comprend une surface dite surface d'appui 132a (voir figure 1) qui présente une largeur, dite largeur d'appui.

Il est entendu, sans qu'il soit nécessaire de le préciser, qu'une largeur, quel que soit l'élément considéré, est mesurée selon une direction parallèle à l'arbre pivot.

Le levier 130 comprend deux faces latérales dites, respectivement, première face 130a et seconde face 130b reliées par un contour 130c (la distance entre la première 130a et la seconde 130b face définit l'épaisseur E du levier 130). Il est entendu sans qu'il soit nécessaire de le préciser que les deux faces latérales du levier sont perpendiculaires au premier arbre pivot 140.

Il est également entendu, sans qu'il soit nécessaire de le préciser, que la face d'appui 132a est une petite partie du contour 130c au niveau de la seconde extrémité 132.

Selon la présente invention, le moyen d'accumulation 120 exerce un effort de poussée sur la première extrémité 131 lorsqu'il est dans l'état armé.

En d'autres termes, dès lors qu'il n'offre aucune résistance à l'effort de poussée exercé par le moyen d'accumulation dans l'état armé, le levier 130 pivote autour du premier arbre pivot 140. Ce mouvement de rotation du levier 130 autorise donc, de manière simultanée, la libération de l'énergie mécanique stockée par le moyen d'accumulation 120, et le passage de ce dernier de l'état armé à l'état désarmé.

Le système d'armement peut comprendre une roue 150 mécaniquement couplée au moyen d'accumulation, et portant un galet, dit galet de butée 151, destiné à appliquer l'effort de poussée sur la première extrémité 131 (figures 1 et 2).

Le module de verrouillage comprend également un élément verrou 170 (figures 1, 2, et 5) destiné à adopter l'une ou l'autre de deux positions dites, respectivement, première position et seconde position.

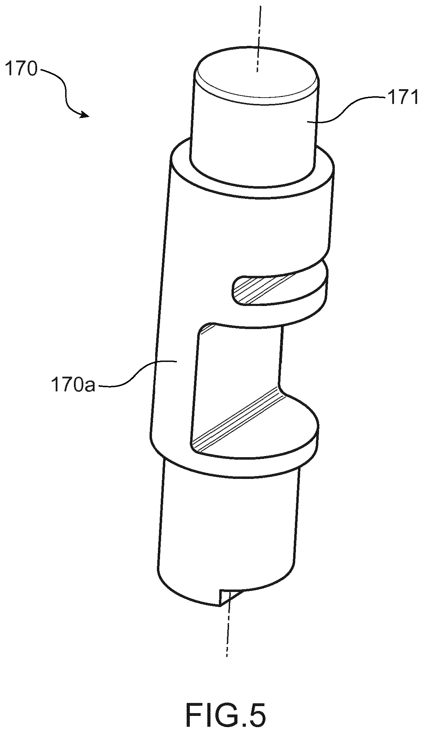

En particulier, la première position correspond à une position pour laquelle la surface d'appui 132a est en appui contre une surface de contact 170a (figure 2 et 5) de l'élément verrou 170 de manière à s'opposer à toute rotation du levier 130 due à l'effort de poussée et maintenir le moyen d'accumulation 120 dans l'état armé.

La seconde position correspond à un retrait de la surface de contact 170a de manière à autoriser le moyen d'accumulation 120 à passer de l'état armé à l'état désarmé.

Par « retrait de la surface de contact », on entend un glissement de ladite surface de sorte que cette dernière s'efface et n'offre plus de résistance à l'effort de poussée exercé par le moyen d'accumulation 120 au niveau de la seconde extrémité 132 du levier 130.

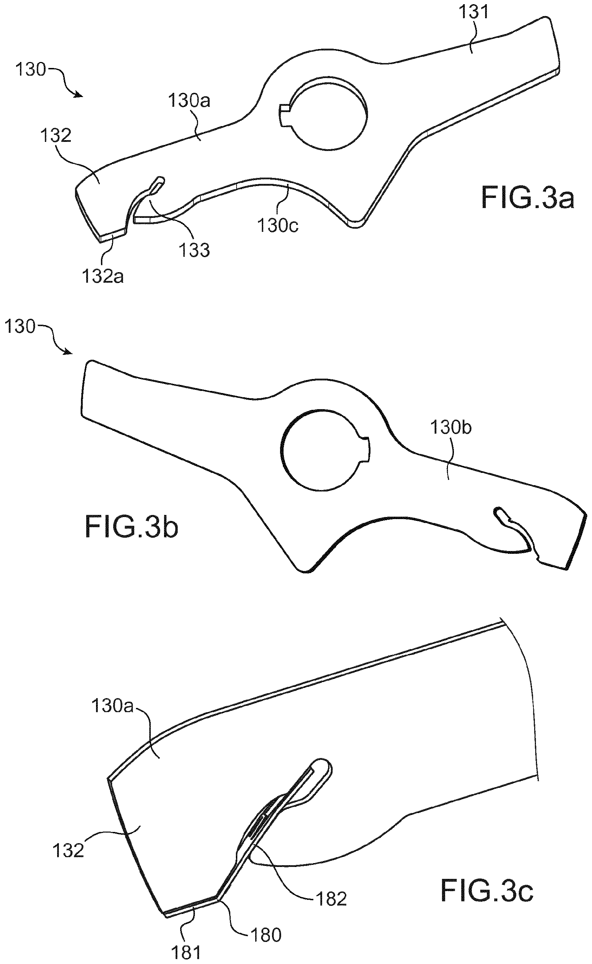

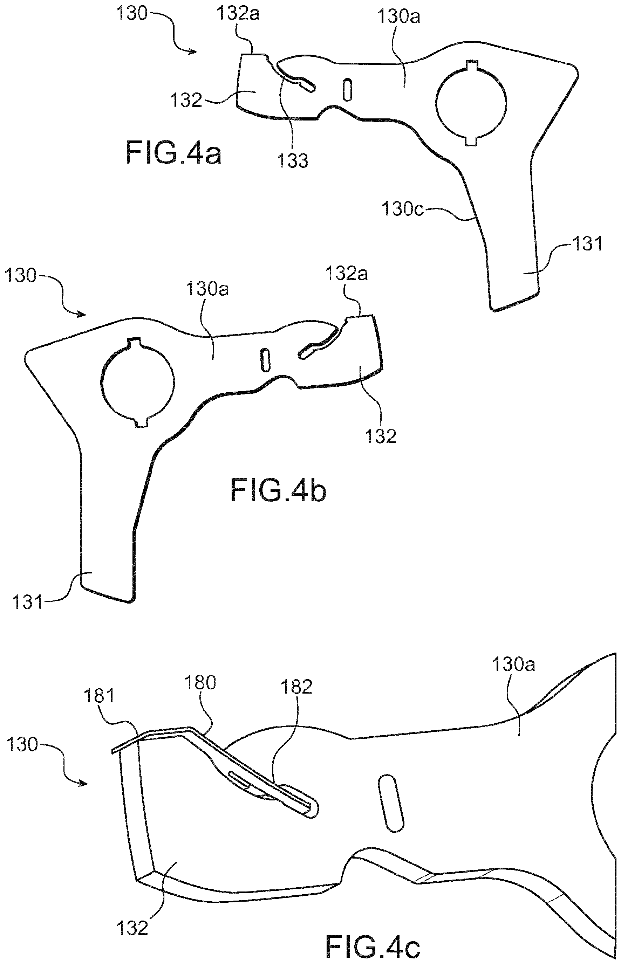

Selon la présente invention, le levier 130 comprend au niveau de sa seconde extrémité un patin 180 fait d'un feuillard métallique (figures 3c et 4c).

Le patin est notamment agencé de manière à s'interposer entre la surface de contact 170a et la surface d'appui 132a.

En particulier, une portion de surface du patin, dite surface secondaire 181, de largeur dite largeur de patin, est en contact avec la surface de contact 170a (voir figures 3c et 4c), lorsque ladite surface d'appui est en appui contre la surface de contact.

Le patin est avantageusement disposé de manière symétrique par rapport au levier 130.

La mise en œuvre d'un tel patin 180 évite ainsi le contact entre la surface de contact 170a et la surface d'appui 132a de sorte que cette dernière ne nécessite plus de préparation et notamment de rectification.

Par ailleurs, un feuillard métallique est généralement formé à partir d'une tôle de métal laminée de sorte que cette dernière présente un état de surface, et notamment une rugosité, compatible avec un coefficient de frottement réduit. Le feuillard métallique peut comprendre de l'acier inoxydable.

Ainsi, la surface secondaire présente une rugosité inférieure à 1,6 µm Ra (« Ra » désignant la rugosité arithmétique), en particulier une rugosité comprise entre 0,6 µm Ra et 1,6 µm Ra.

Si cela s'avère nécessaire, la préparation de la surface secondaire, notamment pour réduire sa rugosité, peut être obtenue par des techniques de polissage plus simple à mettre en œuvre, et d'un coût moins élevé que les méthodes de rectification utilisée pour rectifier une portion de surface d'une pièce usinée.

De manière particulièrement avantageuse, la largeur de patin est supérieure à la largeur d'appui, et notamment égale à au moins deux fois à la largeur d'appui.

Le patin 180 peut comprendre une languette de maintien 182 qui est engagée dans une fente, dite fente de maintien 133 ménagée dans le levier de manière à maintenir le patin audit levier (figures 3c et 4c).

L'engagement de la languette de maintien 182 dans la fente de maintien 133 (figure 3a et 4a) peut être un engagement en force.

De manière complémentaire ou alternative, la fente de maintien 133 peut être pourvue d'un élément de blocage, notamment au moins un ergot, de la languette de maintien 133.

L'ergot peut coopérer avec un perçage pratiqué dans la languette de maintien 182.

Toutefois, ce mode de maintien du patin 180 n'est pas limité à la mise en œuvre de la languette de maintien, et l'homme du métier pourra considérer toute autre solution de maintien susceptible de convenir.

En particulier, le patin 180 peut être maintenu au niveau de la seconde extrémité du levier par collage, par soudure.

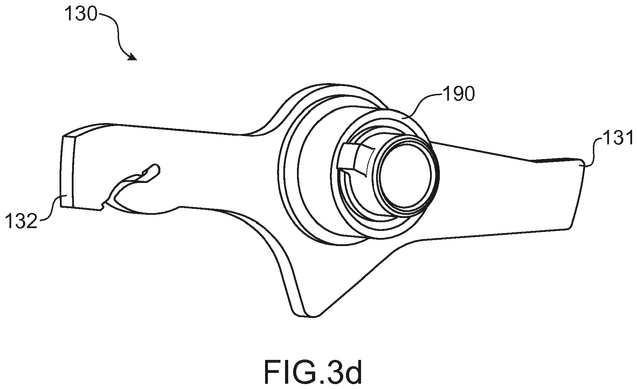

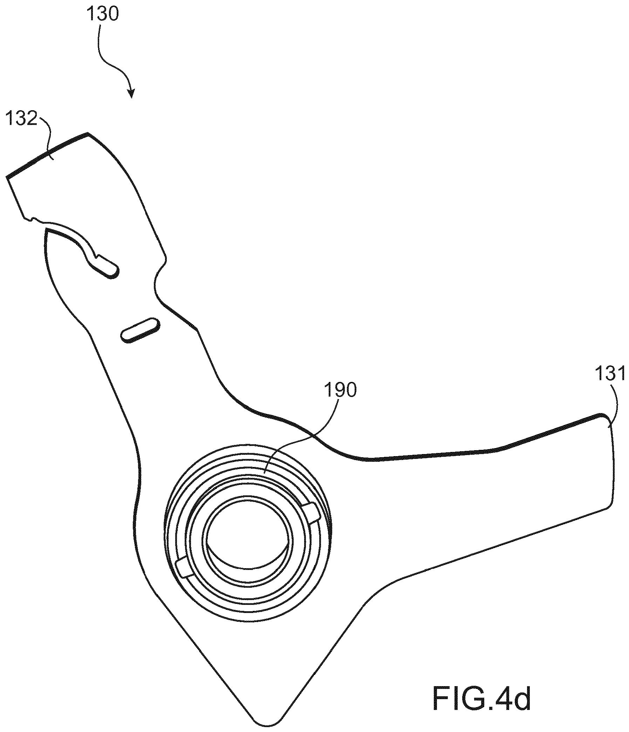

Toujours de manière avantageuse, le levier 130 comprend un moyeu 190 (figure 3d et 4d) surmoulé en matière plastique assurant la liaison pivot dudit levier 130 avec le premier arbre pivot, avantageusement le moyeu comprend un alésage, traversé par le premier arbre pivot, et s'étendant sur une longueur d'au moins trois fois le diamètre de l'arbre pivot.

Cet agencement, en combinaison avec une largeur de patin supérieure à la largeur d'appui, permet de considérer un levier d'une épaisseur réduite, en particulier d'une épaisseur inférieure à 6 mm, et plus particulièrement comprise entre 2 mm et 6 mm.

Un levier dans cette gamme d'épaisseurs peut être obtenu par poinçonnage, découpage d'une tôle métallique (par exemple en acier inoxydable).

Ce type de procédé est relativement simple à mettre en œuvre, et d'un coût réduit par rapport aux techniques d'usinages considérées dans l'état de la technique.

L'élément verrou 170 peut comprendre une demi-lune (figures 1, 2, et 5) en liaison pivot autour d'un second arbre pivot 171. Le second arbre pivot 171 est, avantageusement, essentiellement parallèle au premier arbre pivot 140, la surface de contact étant définie par une section de la surface à géométrie cylindrique de ladite demi-lune.

Une demi-lune, selon la présente invention, est un cylindre tronqué selon un plan parallèle à l'axe de révolution dudit cylindre. La demi-lune comprend alors une surface cylindrique restante dont deux bords sont reliés par une face plane. La section cylindrique restante de la demi-lune comprend la surface de contact de l'élément verrou.

En fonctionnement, la demi-lune est susceptible de pivoter autour du second arbre pivot pour adopter l'une ou l'autre de la première position et de la seconde position.

En particulier, en phase d'armement du moyen d'accumulation 120, la demi-lune est dans sa première position de sorte que, lorsque ledit moyen d'accumulation exerce l'effort de poussée, la surface d'appui 132a vient en appui contre la surface de contact de la demi-lune. Ainsi, durant cette phase d'armement, le moyen d'accumulation accumule une énergie mécanique, et se trouve dans l'état armé.

Un basculement, ou un pivotement de la demi-lune, de sa première position vers sa seconde position rompt toute résistance à l'effort de poussée exercé par le moyen d'accumulation 120 de sorte que ce dernier libère l'énergie mécanique accumulée lors de la phase d'armement, et se retrouve au final dans l'état désarmé.

À titre d'exemples non limitatifs, les figures 1 et 2 illustrent des agencements particuliers relatifs à la présente invention.

Notamment les figures 1 et 2 illustrent un module de verrouillage d'un système d'armement prévu, respectivement, pour l'ouverture et pour la fermeture d'un dispositif d'interruption de courant, et notamment un interrupteur.

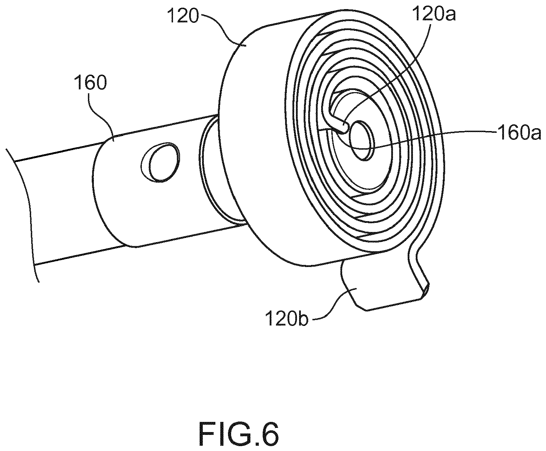

En particulier, le moyen d'accumulation 120 comprend un ressort spiral dont une extrémité, dite extrémité centrale 120a (figure 6) est mécaniquement liée à un arbre, dit arbre d'armement 160. L'arbre d'armement 160 peut avantageusement être essentiellement parallèle au premier arbre pivot 140.

La liaison mécanique entre l'arbre d'armement 160 et l'extrémité centrale 120a est avantageusement assurée via une gorge 160a pratiquée dans ledit arbre d'armement 160.

L'autre extrémité du ressort spiral, dite extrémité périphérique 120b (figure 6), peut être fixe, et notamment couplée mécaniquement à un élément fixe non représenté sur les figures (par exemple, un élément fixe lié au bâti du dispositif, figure 1).

Dans ce cas de figure, la roue 150, est en liaison fixe par rapport à l'arbre d'armement 160 (figure 1).

Ainsi, le ressort spiral, lorsqu'il est dans l'état armé, exerce un effort sur l'arbre d'armement 160, susceptible d'entrainer en rotation ce dernier avec la roue 150. La roue 150 transmet alors l'effort de poussée, via le galet de butée 151, au niveau de la première extrémité 132 du levier 130.

De manière alternative, l'extrémité périphérique 120b peut être en liaison fixe par rapport à la roue 150 (figure 2).

Selon cette configuration, la roue 150 est alors en liaison pivot autour du l'arbre de d'armement 160 (figure 2).

L'armement du ressort spiral est obtenu en exerçant un effort de rotation sur l'arbre d'armement 160.

Le galet de butée 151 peut être monté en liaison glissière sur la roue 150.

La phase d'armement du ressort spiral comprend alors deux phases intermédiaires dites, respectivement, première phase et seconde phase.

La première phase correspond alors à une rotation, autour de l'axe de rotation de l'arbre d'armement 160, de l'ensemble formé par le ressort spiral, la roue 150 et le galet de butée 151. Lors de cette première phase, le galet de butée 151 glisse le long du contour 130c du levier 130 jusqu'à atteindre la première extrémité 131 dudit levier 130.

Dès lors que le galet de butée 151 a atteint la première extrémité, la deuxième phase peut débuter. Lors du déroulement de cette seconde phase, la surface d'appui 132a est en appui contre la surface de contact 170a (il est entendu que le patin est intercalé entre la surface d'appui et la surface de contact), de sorte que le ressort spiral accumule de l'énergie mécanique sous l'action de rotation exercée sur l'arbre d'armement.

À la fin de la deuxième phase, le ressort spiral se trouve dans l'état armé. À cet instant, un simple basculement de la demi-lune dans sa seconde position rompt toute résistance à l'effort de poussée de sorte que le ressort spiral libère toute l'énergie mécanique accumulée lors de la phase d'armement et passe dans l'état désarmé. L'invention concerne également un module de commande du dispositif de coupure de courant. Notamment, le module de commande peut comprendre un système d'armement pour l'ouverture d'un dispositif de coupure de courant et/ou un système d'armement pour la fermeture du dispositif de coupure de courant.

Par ailleurs, dès lors le système d'armement pour l'ouverture et le système d'armement pour la fermeture sont compris dans un module de commande commun, ces derniers peuvent comprendre un arbre d'armement commun.

L'invention concerne également un appareil électrique interrupteur comprenant un module selon la présente invention.

## Revendications

1. Module de verrouillage (100) d'un système d'armement (110) pourvu d'un moyen d'accumulation (120) destiné à libérer une énergie mécanique au cours du passage d'un état armé à un état désarmé, le module comprenant :
- un levier (130) en liaison pivot autour d'un premier arbre pivot (140), et qui comprend une première extrémité (131) et une seconde extrémité (132), la seconde extrémité (132) comprenant une surface, dite surface d'appui (132a), qui présente une largeur, dite largeur d'appui, le moyen d'accumulation (120) pouvant exercer un effort de poussée sur la première extrémité (131) lorsqu'il est dans l'état armé ;
- un élément verrou (170) configuré pour adopter l'une ou l'autre de deux positions dites, respectivement, première position et seconde position, la première position correspondant à une position pour laquelle la surface d'appui (132a) est en appui contre une surface de contact (170a) de l'élément verrou (170) de manière à s'opposer à toute rotation du levier (130) due à l'effort de poussée et maintenir le moyen d'accumulation (120) dans l'état armé, la seconde position correspondant à un retrait de la surface de contact (170a) de manière à autoriser le moyen d'accumulation (120) à passer de l'état armé à l'état désarmé ;
le module étant **caractérisé en ce qu'**un patin (180), fait d'un feuillard métallique et fixé au levier (130), vient s'interposer entre la surface d'appui (132a) et la surface de contact (170a) lorsque la surface d'appui (132a) est en appui contre la surface de contact (170a), un portion de surface du patin (180), dite surface secondaire (181), étant en contact avec la surface de contact (170a), ladite surface secondaire présentant une largeur, dite largeur de patin, supérieure à la largeur d'appui.

2. Module selon la revendication 1, dans lequel la largeur de patin est au moins deux fois supérieure à la largeur d'appui.

3. Module selon la revendication 1 ou 2, dans lequel la surface secondaire (181) présente une rugosité inférieure à 1,6 µm Ra.

4. Module selon l'une des revendications 1 à 3, dans lequel le patin (180) comprend également une languette de maintien (182) qui est engagée dans une fente ménagée dans le levier (130) de manière à maintenir le patin (180) audit levier (130).

5. Module selon l'une des revendications 1 à 4, dans lequel le levier (130) comprend un moyeu (190) surmoulé en matière plastique assurant la liaison pivot dudit levier (130) avec le premier arbre pivot (140), avantageusement le moyeu (190) comprend un alésage, traversé par le premier arbre pivot (140), et s'étendant sur une longueur d'au moins trois fois le diamètre de l'arbre pivot.

6. Module selon la revendication 5, dans lequel le levier (130) comprend une plaque métallique d'une épaisseur inférieure à 6 mm, avantageusement comprise entre 2 mm et 6 mm.

7. Module selon l'une des revendications 1 à 6, dans lequel l'élément verrou (170) est une demi-lune en liaison pivot autour d'un second arbre pivot (171), avantageusement essentiellement parallèle au premier arbre pivot (140), la surface de contact (170a) étant définie par une section de la surface à géométrie cylindrique de la demi-lune.

8. Système d'armement comprenant le module de verrouillage selon l'une des revendications 1 à 7, dans lequel ledit système d'armement (110) comprend une roue (150) mécaniquement couplée au moyen d'accumulation (120) et portant un galet de butée (151) destiné à appliquer l'effort de poussée sur la première extrémité (131).

9. Système d'armement selon la revendication 8, dans lequel le moyen d'accumulation (120) comprend un ressort spiral pourvu d'une extrémité périphérique (120b) et d'une extrémité centrale (120a) mécaniquement liée à un arbre d'armement (160), avantageusement via une gorge (160a) pratiquée dans ledit arbre d'armement (160).

10. Système d'armement selon la revendication 9, dans lequel le système d'armement (110) est un mécanisme de fermeture d'un dispositif de coupure de courant, l'extrémité périphérique (120b) étant liée mécaniquement à la roue (150) elle-même en liaison pivot autour de l'arbre d'armement (160).

11. Système d'armement selon la revendication 9, dans lequel le système d'armement (110) est un mécanisme d'ouverture d'un dispositif de coupure de courant, l'extrémité périphérique (120b) étant maintenue fixe, la roue (150) étant en liaison fixe avec l'arbre d'armement (160).

12. Module de commande d'un dispositif de coupure de courant qui comprend un système d'armement selon la revendication 10 et/ou un système d'armement selon la revendication 11.

13. Module de commande d'un dispositif de coupure de courant qui comprend un système d'armement selon la revendication 10 et un système d'armement selon la revendication 11, le mécanisme d'ouverture et le mécanisme de fermeture ayant un arbre d'armement commun.

14. Appareil électrique interrupteur comprenant un module de commande selon la revendication 12 ou 13.

## Patentansprüche

1. Verriegelungsmodul (100) für ein Spannsystem (110), das mit einem Speichermittel (120) zum Freigeben von mechanischer Energie während des Übergangs von einem gespannten Zustand in einen entspannten Zustand versehen ist, wobei das Modul enthält:
- einen Hebel (130), der um eine erste Schwenkachse (140) schwenkbar gelagert ist und ein erstes Ende (131) und ein zweites Ende (132) aufweist, wobei das zweite Ende (132) eine Fläche, Auflagefläche (132a) genannt, enthält, die eine Breite, Auflagebreite genannt, aufweist, wobei das Speichermittel (120) eine Schubkraft auf das erste Ende (131) ausüben kann, wenn es sich im gespannten Zustand befindet;
- ein Riegelelement (170), das dazu ausgelegt ist, die eine oder andere von zwei Positionen, erste Position bzw. zweite Position genannt, einzunehmen, wobei die erste Position einer Position entspricht, in der die Auflagefläche (132a) an einer Kontaktfläche (170a) des Riegelelements (170) so anliegt, dass sie jeglicher schubkraftbedingter Drehung des Hebels (130) entgegenwirkt und das Speichermittel (120) im gespannten Zustand hält, wobei die zweite Position einem Zurückziehen der Kontaktfläche (170a) entspricht, so dass sie dem Speichermittel (120) gestattet, vom gespannten Zustand in den entspannten Zustand überzugehen;
wobei das Modul **dadurch gekennzeichnet ist, dass** ein Belag (180), der aus einem Metallband hergestellt und an den Hebel (130) befestigt ist, sich zwischen Auflagefläche (132a) und Kontaktfläche (170a) dann einfügt, wenn die Auflagefläche (132a) an der Kontaktfläche (170a) anliegt, wobei ein Flächenabschnitt des Belags (180), sekundäre Fläche (181) genannt, mit der Kontaktfläche (170a) in Kontakt steht, wobei die sekundäre Fläche eine Breite, Belagbreite genannt, aufweist, die größer als die Auflagebreite ist.

2. Modul nach Anspruch 1, wobei die Belagbreite mindestens zweimal so groß ist wie die Auflagebreite.

3. Modul nach Anspruch 1 oder 2, wobei die sekundäre Fläche (181) eine Rauigkeit von weniger als 1,6 µm Ra aufweist.

4. Modul nach einem der Ansprüche 1 bis 3, wobei der Belag (180) ferner eine Haltelasche (182) aufweist, die in einen in dem Hebel (130) ausgebildeten Schlitz eingreift, um den Belag (180) an dem Hebel (130) zu halten.

5. Modul nach einem der Ansprüche 1 bis 4, wobei der Hebel (130) eine mit Kunststoff umspritzte Nabe (190) aufweist, welche die Schwenkverbindung des Hebels (130) mit der ersten Schwenkachse (140) gewährleistet, wobei die Nabe (190) vorteilhafterweise eine Bohrung aufweist, durch die sich die erste Schwenkachse (140) erstreckt und die sich über eine Länge von mindestens dem dreifachen Durchmesser der Schwenkachse erstreckt.

6. Modul nach Anspruch 5, wobei der Hebel (130) eine Metallplatte mit einer Dicke von weniger als 6 mm, vorteilhafterweise zwischen 2 mm und 6 mm, enthält.

7. Modul nach einem der Ansprüche 1 bis 6, wobei das Riegelelement (170) eine halbmondförmige Gestalt hat, die um eine zweite Schwenkachse (171) schwenkbar gelagert ist, die vorteilhafterweise im Wesentlichen parallel zur ersten Schwenkachse (140) verläuft, wobei die Kontaktfläche (170a) durch einen Abschnitt mit zylindrischer Oberflächengeometrie der halbmondförmigen Gestalt definiert ist.

8. Spannsystem mit dem Verriegelungsmodul nach einem der Ansprüche 1 bis 7, wobei das Spannsystem (110) ein Rad (150) enthält, das mechanisch mit dem Speichermitteln (120) gekoppelt ist und eine Anschlagrolle (151) trägt, die dazu bestimmt ist, die Schubkraft auf das erste Ende (131) auszuüben.

9. Spannsystem nach Anspruch 8, wobei das Speichermittel (120) eine Spiralfeder enthält, die mit einem Umfangsende (120b) und einem zentralen Ende (120a) versehen ist, das vorteilhafterweise über eine in der Spannwelle (160) ausgebildete Nut (160a) mechanisch mit einer Spannwelle (160) verbunden ist.

10. Spannsystem nach Anspruch 9, wobei es sich bei dem Spannsystem (110) um einen Schließmechanismus zum Schließen einer Stromabschaltvorrichtung handelt, wobei das Umfangsende (120b) mechanisch mit dem Rad (150) verbunden ist, das seinerseits um die Spannwelle (160) verschwenkbar gelagert ist.

11. Spannsystem nach Anspruch 9, wobei es sich bei dem Spannsystem (110) um einen Öffnungsmechanismus zum Öffnen einer Stromabschaltvorrichtung handelt, wobei das Umfangsende (120b) festgehalten wird und das Rad (150) in fester Verbindung mit der Spannwelle (160) steht.

12. Modul zum Steuern einer Stromabschaltvorrichtung mit einem Spannsystem nach Anspruch 10 und/oder einem Spannsystem nach Anspruch 11.

13. Modul zum Steuern einer Stromabschaltvorrichtung mit einem Spannsystem nach Anspruch 10 und einem Spannsystem nach Anspruch 11, wobei der Öffnungsmechanismus und der Schließmechanismus eine gemeinsame Spannwelle aufweisen.

14. Elektrische Schaltvorrichtung mit einem Steuermodul nach Anspruch 12 oder 13.

## Claims

1. Locking module (100) of an arming system (110) provided with an accumulation means (120) configured to release a mechanical energy when switching from an armed state to a disarmed state, the module comprising:
- a lever (130) pivot-linked around a first pivot shaft (140), and which comprises a first end (131) and a second end (132), the second end (132) comprising a surface, called bearing surface (132a), which has a width, called bearing width, the accumulation means (120) being able to exert a thrust force on the first end (131) when it is in the armed state;
- a lock element (170) configured to adopt either one of two positions called, respectively, first position and second position, the first position corresponding to a position for which the bearing surface (132a) is bearing against a contact surface (170a) of the lock element (170) so as to oppose any rotation of the lever (130) due to the thrust force and to maintain the accumulation means (120) in the armed state, the second position corresponding to a retraction of the contact surface (170a) so as to allow the accumulation means (120) to switch from the armed state to the unarmed state;
the module being **characterised in that** a shoe (180), made of a metal strip and fixed to the lever (130), is interposed between the bearing surface (132a) and the contact surface (170a) when the bearing surface (132a) bears against the contact surface (170a), a surface portion of the shoe (180), called secondary surface (181), being in contact with the contact surface (170a), said secondary surface having a width, called the shoe width, greater than the bearing width.

2. Module according to claim 1, wherein the shoe width is at least twice the bearing width.

3. Module according to claim 1 or 2, wherein the secondary surface (181) has a roughness less than 1.6 µm Ra.

4. Module according to one of claims 1 to 3, wherein the shoe (180) also comprises a holding tongue (182) which is engaged in a slot formed in the lever (130) so as to hold the shoe (180) with said lever (130).

5. Module according to one of claims 1 to 4, wherein the lever (130) comprises a hub (190) overmoulded in plastic material ensuring the pivot- link connection of said lever (130) with the first pivot shaft (140), advantageously the hub (190) comprises a bore, traversed by the first pivot shaft (140), and extending over a length of at least three times the diameter of the pivot shaft.

6. Module according to claim 5, wherein the lever (130) comprises a metal plate with a thickness less than 6 mm, advantageously comprised between 2 mm and 6 mm.

7. Module according to one of claims 1 to 6, wherein the lock member (170) is a half-moon pivot-linked around a second pivot shaft (171), advantageously essentially parallel to the first pivot shaft (140), the contact surface (170a) being defined by a section of the cylindrical geometry surface of the half moon.

8. Arming system comprising the locking module according to one of claims 1 to 7, wherein said arming system (110) comprises a wheel (150) which is mechanically coupled to the accumulation means (120) and carrying a stop roller (151) intended to apply the thrust force on the first end (131).

9. Arming system according to claim 8, wherein the accumulation means (120) comprises a spiral spring provided with a peripheral end (120b) and a central end (120a) mechanically connected to an arming shaft (160), advantageously via a groove (160a) formed in said arming shaft (160).

10. Arming system according to claim 9, wherein the arming system (110) is a mechanism for closing a current breaking device, the peripheral end (120b) being mechanically connected to the wheel (150) which is in turn pivot-linked around the arming shaft (160).

11. Arming system according to claim 9, wherein the arming system (110) is a mechanism for opening a current breaking device, the peripheral end (120b) being maintained fixed, the wheel (150) being in fixed connection with the arming shaft (160).

12. Control module of a power breaking device which comprises an arming system according to claim 10 and/or an arming system according to claim 11.

13. Control module of a current breaking device which comprises an arming system according to claim 10 and an arming system according to claim 11, the opening mechanism and the closing mechanism having a common arming shaft.

14. Electrical switch apparatus comprising a control module according to claim 12 or 13.
